# EUROPÄISCHE PATENTSCHRIFT

(11) **EP 2 316 755 B1**
(45) Veröffentlichungstag und Bekanntmachung des Hinweises auf die Patenterteilung: **17.12.2014**
(21) Anmeldenummer: 10007868.2
(22) Anmeldetag: 28.07.2010
(51) Int. Cl.: B65G 1/137

(54) **Kommisionierstation**
Picking station
Station de commissionnement

(30) Priorität: 28.10.2009 DE 102009050965
(43) Veröffentlichungstag der Anmeldung: 04.05.2011
(73) Patentinhaber: Dr. Ing. h.c. F. Porsche AG, 70435 Stuttgart (DE)
(72) Erfinder: Spahn, Lothar, 74354 Besigheim (DE); Brandtner, Christoph, 70182 Stuttgart (DE); Kost, Uwe, 71717 Beilstein (DE); Ziegler, Erik, 73110 Hattenhofen (DE); Schmidt, Felix, 72649 Wolfschlugen (DE)

(56) Entgegenhaltungen:
- EP-A1- 0 458 021
- EP-A1- 1 331 179
- WO-A1-89/07081
- DE-A1- 2 153 167
- DE-A1- 10 200 077
- DE-U1- 20 020 595
- DE-U1-202004 009 708
- FR-A1- 2 924 103

## Beschreibung

Die vorliegende Erfindung betrifft eine Kommissionierstation, die von einer Rückseite her be- und entladbar ist und an einer Frontseite das zu kommissionierende Gut auf einer Trageinheit bereitstellt. Die Erfindung betrifft außerdem eine Kommissioniereinrichtung mit mehreren benachbart zueinander angeordneten Kommissionierstationen sowie ein Kommissionierverfahren unter Verwendung einer derartigen Kommissioniereinrichtung.

Kommissionierarbeiten sind vielerorts erforderlich, insbesondere auch im Bereich einer Fahrzeugproduktion, bei welcher bspw. für unterschiedliche Baureihen oder Modelle unterschiedliche Baukomponenten zuerst kommissioniert und in kommissioniertem Zustand an eine Fertigungsstraße angeliefert werden müssen. Hierbei spielt insbesondere auch eine sog. "Just-in-time"-Produktion eine große Rolle. Bei derartigen "Just-in-time"-Produktionen muss eine Kommissionierung einfach, problemlos und schnell erfolgen können. Eine gattungsgemäße Station wird in der EP 1 331 179 A1 beschrieben.

Die vorliegende Erfindung beschäftigt sich mit dem Problem, einen Kommissioniervorgang zu verbessern, insbesondere eine Kommissionierstation anzugeben, mit welcher insbesondere ein Kommissionierablauf gestrafft und vereinfacht werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Kommissionierstation mit einem im Wesentlichen U-förmigen Förderweg auszustatten, sodass diese einfach von nur einer Seite aus, nämlich vorzugsweise von ihrer Rückseite aus, be- und entladbar ist und eine ungestörte Entnahme der zu kommissionierenden Güter an deren Frontseite erfolgen kann. Erfindungsgemäß weist dabei die Kommissionierstation eine Vollgutzone und eine benachbart dazu angeordnete Leergutzone auf, wobei in der Vollgutzone das zu kommissionierende Gut bzw. die zu kommissionierenden Güter zwischen der Rückseite und der Frontseite verfahrbar ist/sind, während in der Leergutzone ein Leergut zwischen der Frontseite und der Rückseite verfahrbar ist. An der Frontseite der erfindungsgemäßen Kommissionierstation ist eine quer zur Vollgutzone und zur Leergutzone angeordnete Verbindungszone vorgesehen, sodass die drei Zonen, nämlich die Vollgutzone, die Verbindungszone und die Leergutzone insgesamt U-förmig angeordnet sind. Das zu kommissionierende Gut ist dabei üblicherweise auf einer Trageinheit, bspw. einem Palettenträger, abgestellt, die entlang der Vollgutzone von der Rückseite zur Frontseite und entlang der Frontseite über die Verbindungszone zur Leergutzone und entlang dieser wieder von der Frontseite zur Rückseite der Kommissionierstation verstellbar ist. Die Trageinheit wird somit zusammen mit dem kommissionierten Gut von der Rückseite der Kommissionierstation in deren Vollgutzone eingestellt und kann entlang der Vollgutzone von der Rückseite zur Frontseite der Kommissionierstation leicht verfahren werden. An der Frontseite der Kommissionierstation ist nun eine problemlose und einfache Entnahme des kommissionierten Gutes möglich, sodass nach der Entnahme lediglich noch die Trageinheit, d. h. bspw. der Palettenträger, in der Vollgutzone verbleibt. Diese Trageinheit kann nun - sofern sie entleert wurde - einfach entlang der Verbindungszone in die Leergutzone verschoben werden, woraufhin wiederum eine mit Kommissioniergut beladene Trageinheit entlang der Vollgutzone zur Frontseite der Kommissionierstation nachrollen bzw. rutschen kann. Im Bereich der Verbindungszone können dabei federbeaufschlagte Lager, insbesondere Kugellager, vorgesehen sein, die ausschließlich ein Verschieben einer entleerten Trageinheit erlauben. Eine nicht entleerte Trageinheit hingegen ist so schwer, dass die federbeaufschlagte Lager, insbesondere die Kugellager, niedergedrückt werden und dadurch ein Verschieben der Trageinheit verhindern. Hat die Trageinheit die Leergutzone erreicht, so wird sie entlang dieser von deren Frontseite zur Rückseite der Kommissionierstation bewegt und kann dort leicht auf einen Kommissionierwagen, der zum be- und entladen der Kommissionierstation verwendet wird, aufgeladen werden. Alle Zonen sind dabei eben ausgebildet. Die erfindungsgemäße Kommissionierstation mit ihrem U-förmigen Förderweg erlaubt dabei einen flüssigen, insbesondere geschlossenen, Materialkreislauf sowie eine Be- und Entladung der jeweiligen Kommissionierstation ausschließlich von deren Rückseite aus. Die Entnahme des Kommissioniergutes kann dagegen ausschließlich über die Frontseite der Kommissionierstation erfolgen, sodass sich die Wege der Materialanlieferung und der Materialentnahme nicht gegenseitig behindern.

Erfindungsgemäß sind zumindest in der Vollgutzone und der in Leergutzone Führungsschienen angeordnet, in welchen die Trageinheit geführt ist. Dies ermöglicht eine besonders exakte und präzise Führung der Trageinheit und damit auch des zu kommissionierenden Gutes, wodurch ein reibungsloses Verfahren der Trageinheiten insgesamt gewährleistet werden kann.

Erfindungsgemäß ist eine Verstelleinrichtung vorgesehen, mit welcher das Leergut, d. h. die leere Trageinheit, in der Leergutzone von der Frontseite zur Rückseite beförderbar ist. Eine derartige Verstelleinrichtung wird mittels eines Fußpedals, das auf eine Zackenleiste wirkt, bewerkstelligt und muss aufgrund der leeren Trageinheit nicht besonders stark ausgebildet sein. Eine derartige Verstelleinrichtung gewährleistet, dass die leere Trageinheit selbständig und damit äußerst einfach von der Frontseite der Kommissionierstation entlang der Leergutzone in die Rückseite der Kommissionierstation verstellt wird und dort einfach auf einen bereitstehenden Kommissionierwagen aufgeladen werden kann. Selbstverständlich ist eine derartige Zackenleiste auch im Bereich der Vollgutzone angeordnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine Kommissioniereinrichtung mit mehreren erfindungsgemäßen Kommissionierstationen,
- Fig. 2: eine Detaildarstellung einer erfindungsgemäßen Kommissionierstation,
- Fig. 3: eine Schnittdarstellung durch die Kommissionierstation im Bereich einer als Zackenleiste ausgebildeten Verstelleinrichtung,
- Fig. 4: eine Draufsicht auf die Verstelleinrichtung.

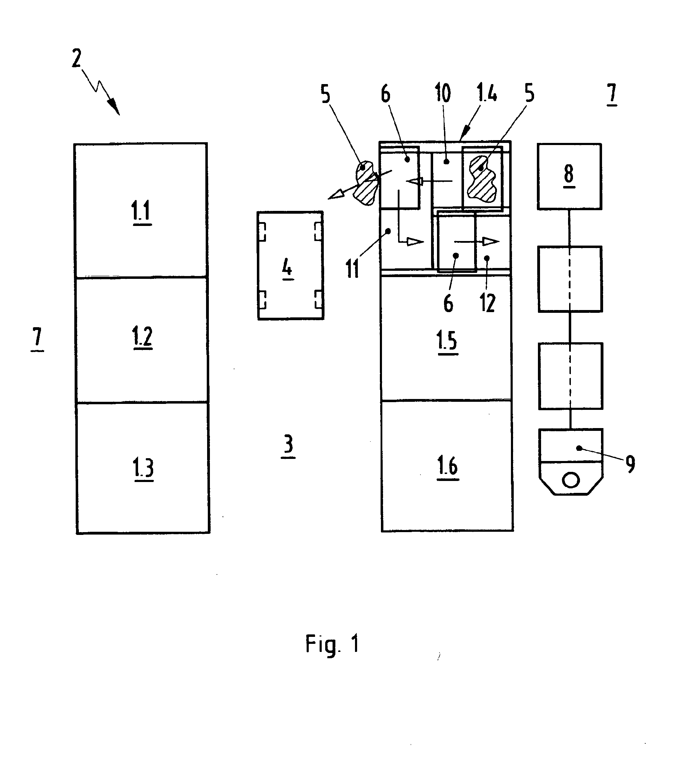

Entsprechend der Fig. 1, weist eine mit mehreren, erfindungsgemäß ausgebildeten Kommissionierstationen 1.1 bis 1.6 ausgestattete Kommissioniereinrichtung 2 eine Kommissionierstraße 3 auf, auf welcher ein Kommissionierregal 4 verfahrbar ist. Je nach Bedarf werden dabei von einer nicht gezeigten Person die zu kommissionierenden Güter 5 aus den einzelnen Kommissionierstationen 1.1 bis 1.6. entnommen und auf dem Kommissionierregal 4 abgelegt bzw. mit diesem zu einer Fertigung verfahren.

Jede der Kommissionierstationen 1.1 bis 1.6 wird dabei regelmäßig in Abhängigkeit deren Füllstand mit neuem Kommissioniergut 5 versorgt, das üblicherweise auf Trageinheiten 6, bspw. Palettenträgern, abgelegt bzw. abgestellt ist, um die Handhabung des Kommissioniergutes 5 zu erleichtern. Sowohl eine Befüllung der einzelnen Kommissionierstationen 1.1 bis 1.6 als auch eine Entsorgung der leer geräumten Trageinheiten 6 erfolgt dabei von einer Rückseite 7 der Kommissionierstation 1.1 bis 1.6, die üblicherweise auch als Bereitstellungszone bezeichnet wird. Die Frontseite der jeweiligen Bereitstellungszonen 1.1 bis 1.6 ist dabei der Kommissionierstrasse 3 zugewandt. Auf der Rückseite 7 der einzelnen Kommissionierstationen 1.1 bis 1.6 können dabei Kommissionierwagen 8 fahren, die von einem Zugfahrzeug 9 bewegt, d. h., insbesondere gezogen werden. Auf diesen Kommissionierwagen 8 werden die mit Kommissioniergut 5 beladenen Trageinheiten 6 zu den einzelnen Kommissionierstationen 1.1 bis 1.6 angeliefert und die entleerten Trageinheiten 6 wieder entsorgt.

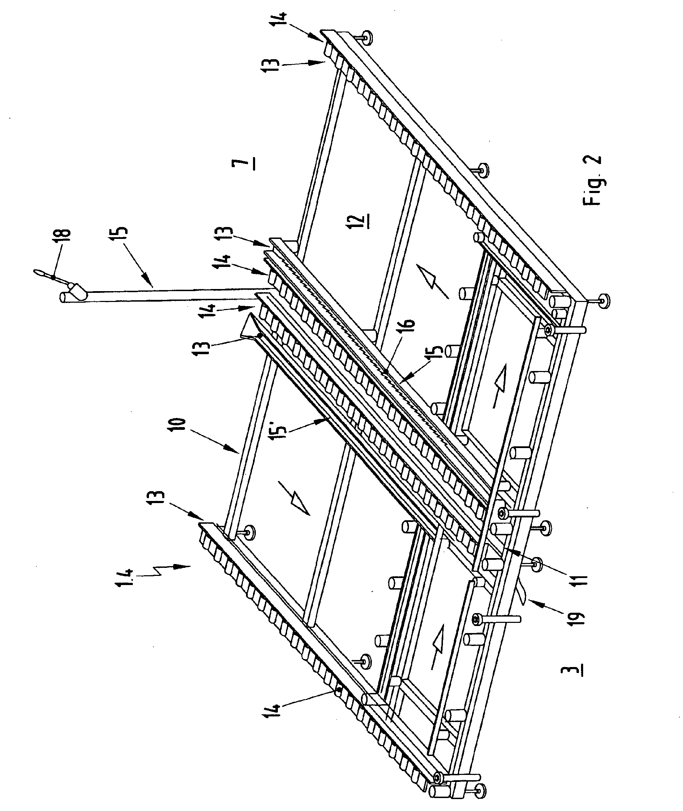

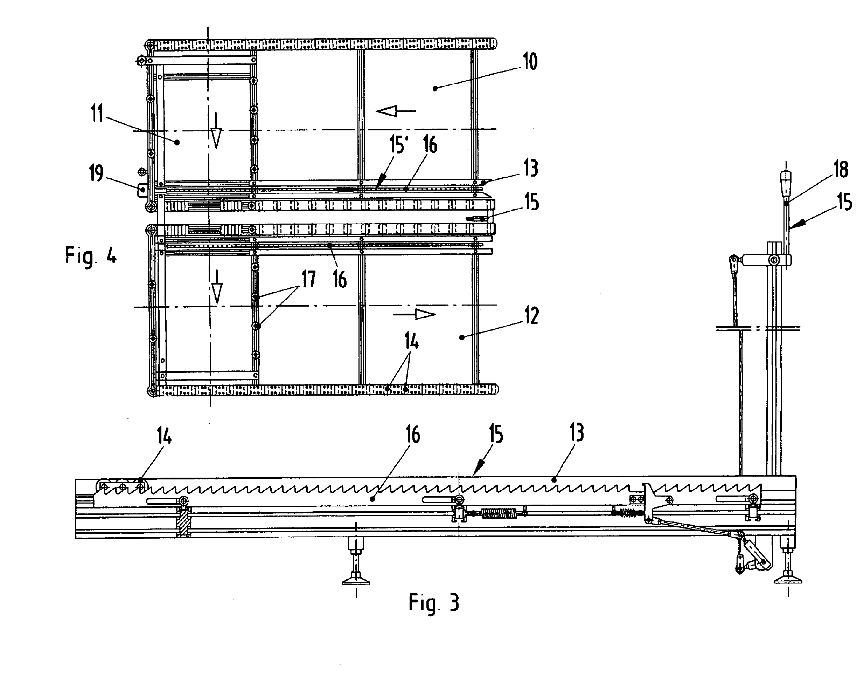

Dabei erfolgt üblicherweise eine Übergabe der mit Kommissioniergut 5 beladenen Trageinheiten 6 vom Kommissionierwagen 8 in eine Vollgutzone 10 (vgl. auch Fig. 2 und 4) der jeweiligen Kommissionierstation 1.1 bis 1.6, woraufhin anschließend diese Trageinheit 6 von der Rückseite 7 zur Frontseite der jeweiligen Kommissionierstationen 1.1. bis 1.6 verfahren wird. An der Frontseite kann dann von einer entsprechenden Person das Kommissioniergut 5 einfach entnommen und auf das Kommissionierregal 4 umgeladen werden. Im weiteren Verlauf wird die nun entleerte Trageinheit 6 entlang einer Verbindungszone 11 hin zu einer Leergutzone 12 der jeweiligen Kommissionierstation 1.1 bis 1.6 verstellt und von dort wieder an der Rückseite 7 der jeweiligen Kommissionierstation 1.1 bis 1.6 verfahren. Von dieser Position aus kann die nun entleerte Trageinheit 6 auf den Kommissionierwagen 8 aufgeladen und von diesem entsorgt werden.

Eine detaillierte Darstellung der erfindungsgemäßen Kommissionierstation 1.1 bis 1.6 ist dabei in Fig. 2 und 4 dargestellt. Sowohl der Fig. 1 als auch der Fig. 2 kann dabei entnommen werden, dass bei den erfindungsgemäßen Kommissionierstationen 1.1 bis 1.6 die Vollgutzonen 10, die Verbindungszonen 11 und die jeweiligen Leergutzonen 12 jeweils U-förmig angeordnet sind, wobei die Verbindungszone 11 quer zur Vollgutzone 10 und zur Leergutzone 12 an der Frontseite der jeweiligen Kommissionierstation 1.1 bis 1.6 verläuft.

Wie den Fig. 2 und 4 zu entnehmen ist, sind sowohl in der Vollgutzone 10 als auch in der Leergutzone 12 Führungsschienen 13, in welchen die Trageinheit 6 und damit das zu kommissionierende Gut 5 zuverlässig geführt ist. An einem jeweiligen der Rückseite 7 zugewandten Endbereich der Führungsschienen 13 sind diese trichterförmig aufgeweitet, um insbesondere ein Einfahren bzw. Einschieben der Trageinheiten 6 mit den daran bodenseitig montierten Rollen in die Führungsschienen 13 zu erleichtern. Eine derartige trichterförmige Aufweitung ist dabei generell nur im Bereich der Vollgutzone 10 erforderlich. Darüber hinaus sind gemäß der Fig. 2 sowohl der Vollgutzone 10 als auch in der Leergutzone 12 Transportrollenbänder 14 vorgesehen, die eine Verfahrbewegung der entweder vollen oder leeren Trageinheit 6 erleichtern. Zum Verstellen der entleerten Trageinheiten 6 zur Rückseite 7 der jeweiligen Kommissionierstation 1.1 bis 1.6 kann eine Verstelleinrichtung 15 vorgesehen sein. Diese Verstelleinrichtung 15 kann beispielsweise eine Zackenleiste 16 aufweisen, die mit einem Hebel 18 bewegbar ist. Die Zackenleiste 16 wirkt dabei mit an der Trageinheit 6 angeordneten Laschen zusammen und verhindert insbesondere eine unerwünschte Bewegung der Trageinheit 6 in der Leergutzone 12 durch einen Eingriff in die Laschen. Insbesondere kann dadurch auch ein unerwünschtes Herausfahren der entleerten Trageinheit 6 von der Leergutzone 12 auf die auf der Rückseite 7 verlaufende Gasse verhindert werden. In der Vollgutzone 10 kann eine ähnliche Verstelleinrichtung 15 mit einer Zackenleiste 16 vorgesehen sein, die mit einem Fußpedal 19 bewegbar ist. Durch ein Niederdrücken des Fußpedals 19 kann der Werker die Trageinheit 6 in der Vollgutzone 10 leicht bewegen.

Generell erfolgt die Kommissionierung der Kommissioniergüter 5 mit den erfindungsgemäßen Kommissionierstationen 1.1 bis 1.6 wie folgt:

Zunächst wird mittels geeigneter Kommissionierwagen 8 das Kommissioniergut 5 auf einer Trageinheit 6, bspw. einem Palettenträger, zur Vollgutzone 10 der jeweiligen Kommissionierstation 1.1 bis 1.6 angeliefert. Anschließend erfolgt die Übergabe der Trageinheit 6 vom Kommissionierwagen 8 zur Vollgutzone 10 der Kommissionierstation 1.1 bis 1.6, woraufhin dieses entlang der Vollgutzone 10 von der Rückseite 7 zur Frontseite, d. h. zur Kommissionierstraße 3 verfährt. Dort kann das Kommissioniergut 5 von der Trageinheit 6 durch einen Kommissionierer entnommen und bspw. auf einem Kommissionierregal 4 abgelegt werden. Im Bereich der Verbindungszone 11 sind federbeaufschlagte Lager 17, insbesondere Kugellager, vorgesehen, die ein Verschieben einer entleerten Trageinheit 6 erlauben. Eine noch befüllte Trageinheit 6 drückt hingegen die Lager 17 bzw. eine federbeaufschlagte Kugel derselben nieder, so dass die Trageinheit 6 auf den Transportrollenbänder 14 aufliegt und eine Querbewegung zu diesen Transportrollenbändern 14 verhindert wird. Erst eine entleerte Trageinheit 6 ist so leicht, dass die Federn der federbeaufschlagten Lager 17 diese anheben können, woraufhin die Trageinheit 6 leicht auf den Kugeln der Lager 17 entlang der Verbindungszone 11 verschoben werden können.

Anschließend wird die nunmehr entleerte Trageinheit 6 von der Vollgutzone 10 über die Verbindungszone 11 in die Leergutzone 12 und entlang dieser wieder zur Rückseite 7 der Kommissionierstation 1.1 bis 1.6 verfahren. Dort erfolgt eine Übergabe der entleerten Trageinheit 6 von der Leergutzone 12 auf den Kommissionierwagen 8 und anschließend deren Abtransport.

Mit den erfindungsgemäßen Kommissionierstation 1.1 bis 1.6 ist ein durch die Verwendung entsprechender Kommissionierwagen 8 geschlossener Materialkreislauf gewährleistet, wobei sich eine Fahrspur der Kommissionierwagen 8 und der Kommissionierregale 4 nicht kreuzt. Die Ver- und Entsorgung der einzelnen Kommissionierstationen 1.1 bis 1.6 kann dabei ausschließlich von der Rückseite 7 der jeweiligen Kommissionierstation 1.1 bis 1.6 erfolgen.

## Patentansprüche

1. Kommissionierstation (1.1-1.6), die von einer Rückseite (7) her be- und entladbar ist und an einer Frontseite das zu kommissionierende Gut (5) auf einer Trageinheit (6) bereitstellt, wobei die Kommissionierstation (1.1-1.6) eine Vollgutzone (10) und eine benachbarte Leergutzone (12) aufweist, wobei in der Vollgutzone (10) das zu kommissionierende Gut (5) zwischen der Rückseite (7) und der Frontseite verfahrbar ist, während in der Leergutzone (12) die entleerte Trageinheit (6) zwischen der Frontseite und der Rückseite (7) verfahrbar ist, wobei an der Frontseite eine Verbindungszone (11) vorgesehen ist, welche die Vollgutzone (10) mit der Leergutzone (12) verbindet, so dass die drei Zonen (10,11,12) insgesamt U-förmig angeordnet sind und einen Transport der Trageinheit (6) entlang der Vollgutzone (10) von der Rückseite (7) zur Frontseite, entlang der Frontseite über die Verbindungszone (11) zur Leergutzone (12) und entlang dieser wieder von der Frontseite zur Rückseite (7) der Kommissionierstation (1.1-1.6) erlauben, **dadurch gekennzeichnet, dass** zumindest in der Vollgutzone (10) und in der Leergutzone (12) Führungsschienen (13) vorgesehen sind, in welchen die Trageinheit (6) geführt ist, und wobei sowohl in der Vollgutzone (10) als auch in der Leergutzone (12) Transportrollenbänder (14) vorgesehen sind, die eine Verfahrbewegung der entweder vollen oder leeren Trageinheit (6) erleichtern, und wobei in der Leergutzone (12) eine erste Verstelleinrichtung (15, 15') vorgesehen ist, wobei die Verstelleinrichtung (15, 15') eine Zackenleiste (16, 16') umfasst, die mit einem Hebel (18) bewegbar ist, und wobei in der Vollgutzone (10) eine weitere eine Zackenleiste (16, 16') umfassende Verstelleinrichtung (15, 15') vorgesehen ist, die mit einem Fußpedal (19) bewegbar ist.

2. Kommissionierstation nach Anspruch 1, **dadurch gekennzeichnet, dass** im Bereich der Verbindungszone (11) federbeaufschlagte Lager (17), insbesondere Kugellager, vorgesehen sind, die ausschließlich ein Verschieben einer entleerten Trageinheit (6) erlauben.

3. Kommissionierstation nach einem der Ansprüche 1 oder 2, **dadurch gekennzeichnet, dass** zumindest die Führungsschienen (13) der Vollgutzone (10) in Richtung der Rückseite (7) aufgeweitet sind.

4. Kommissioniereinrichtung (2) mit mehreren benachbart zueinander angeordneten Kommissionierstationen (1.1=1.6) nach einem der Ansprüche 1 bis 3, **dadurch gekennzeichnet, dass** zumindest ein Kommissionierwagen (8) vorgesehen ist, der entlang der Rückseite (7) der Kommissionierstationen (1.1-1.6) verfahrbar ist und der derart zu den Vollgutzonen/Leergutzonen (10,12) der einzelnen Kommissionierstationen (1.1-1.6) positionierbar ist, dass Vollgut/Leergut übergeben/übernommen werden kann.

5. Kommissionierverfahren unter Verwendung einer Kommissioniereinrichtung (2) gemäß dem Anspruch 4, **gekennzeichnet durch** folgende Verfahrensschritte,
- Antransport von auf einer Trageinheit (6) befindlichem Kommissioniergut (5) zu einer Kommissionierstation (1.1-1.6) mittels eines Kommissionierwagens (8),
- Übergabe der Trageinheit (6) samt Kommissioniergut (5) vom Kommissionierwagen (8) zur Vollgutzone (10) der Kommissionierstation (1.1-1.6),
- Verfahren des Kommissioniergutes (5) entlang der Vollgutzone (10) von der Rückseite (7) der Kommissionierstation (1.1-1.6) zu deren Frontseite,
- Entnahme des Kommissionierguts (5) **durch** einen Kommissionierer,
- Verfahren der Trageinheit (6) von der Vollgutzone (10) über die Verbindungszone (11) in die Leergutzone (12) und entlang dieser wieder zur Rückseite (7) der Kommissionierstation (1.1-1.6),
- Übergabe der Trageinheit (6) von der Leergutzone (12) auf den Kommissionierwagen (8),
- Abtransport der Trageinheit (6) mittels des Kommissionierwagens (8).

6. Kommissionierverfahren nach Anspruch 5, **dadurch gekennzeichnet, dass** zum Verfahren der Trageinheit (6) entlang der Leergutzone (12) zur Rückseite (7) der Kommissionierstation (1.1-1.6) eine Verstelleinrichtung (15) verwendet wird.

## Claims

1. Order-picking station (1.1-1.6) which can be loaded and unloaded from a rear side (7) and on a front side of which the article (5) which is to be picked is positioned on a carrying unit (6), wherein the order-picking station (1.1-1.6) has a filled-container zone (10) and an adjacent empty-container zone (12), wherein, in the filled-container zone (10), the article (5) which is to be picked can be displaced between the rear side (7) and the front side, whereas, in the empty-container zone (12), the emptied carrying unit (6) can be displaced between the front side and the rear side (7), wherein the front side is provided with a connecting zone (11) which connects the filled-container zone (10) to the empty-container zone (12), and therefore the three zones (10, 11, 12) are arranged in a U-shaped manner overall and make it possible for the carrying unit (6) to be transported along the filled-container zone (10) from the rear side (7) to the front side, along the front side, via the connecting zone (11), to the empty-container zone (12), and along the latter once again from the front side to the rear side (7) of the order-picking station (1.1-1.6), **characterized in that** at least the filled-container zone (10) and the empty-container zone (12) contain guide rails (13), in which the carrying unit (6) is guided, and wherein both the filled-container zone (10) and the empty-container zone (12) contain transporting-roller belts (14), which facilitate a displacement movement of the either full or empty carrying unit (6), and wherein the empty-container zone (12) contains a first adjusting device (15, 15'), wherein the adjusting device (15, 15') comprises a serrated strip (16, 16'), which can be moved by a lever (18), and wherein the filled-container zone (10) contains a further adjusting device (15, 15'), which comprises a serrated strip (16, 16') and can be moved by a foot pedal (19').

2. Order-picking station according to Claim 1, **characterized in that** the region of the connecting zone (11) contains spring-activated bearings (17), in particular ball bearings, which exclusively allow displacement of an emptied carrying unit (6).

3. Order-picking station according to either of Claims 1 and 2, **characterized in that** at least the guide rails (13) of the filled-container zone (10) are widened in the direction of the rear side (7).

4. Order-picking apparatus (2) having a plurality of order-picking stations (1.1-1.6) according to one of Claims 1 to 3 arranged adjacent to one another, **characterized by** the provision of at least one order-picking carriage (8), which can be displaced along the rear side (7) of the order-picking stations (1.1-1.6) and can be positioned in relation to the filled-container zones/empty-container zones (10, 12) of the individual order-picking stations (1.1-1.6) such that filled-containers/empty containers can be transferred/received.

5. Order-picking method using an order-picking apparatus (2) according to Claim 4, **characterized by** the following method steps:
- an article (5) located on a carrying unit (6) is transported upwards to an order-picking station (1.1-1.6) by means of an order-picking carriage (8),
- the carrying unit (6), together with the article (5), is transferred by the order-picking carriage (8) to the filled-container zone (10) of the order-picking station (1.1-1.6),
- the article (5) is displaced along the filled-container zone (10) from the rear side (7) of the order-picking station (1.1-1.6) to the front side thereof,
- the article (5) is removed by an order picker,
- the carrying unit (6) is displaced from the filled-container zone (10), via the connecting zone (11), into the empty-container zone (12), and along the latter once again to the rear side (7) of the order-picking station (1.1-1.6),
- the carrying unit (6) is transferred from the empty-container zone (12) onto the order-picking carriage (8),
- the carrying unit (6) is transported away by means of the order-picking carriage (8).

6. Order-picking method according to Claim 5, **characterized in that** an adjusting device (15) is used in order to displace the carrying unit (6) along the empty-container zone (12) to the rear side (7) of the order-picking station (1.1-1.6).

## Revendications

1. Poste de préparation des commandes (1.1-1.6) qui peut être chargé et déchargé par un côté arrière (7) et qui fournit au niveau d'un côté avant le produit (5) à préparer sur une unité porteuse (6), le poste de préparation des commandes (1.1-1.6) présentant une zone de pleins (10) et une zone de vides (12) adjacente, le produit (5) à préparer pouvant être déplacé dans la zone de pleins (10) entre le côté arrière (7) et le côté avant, tandis que dans la zone de vides (12), l'unité porteuse (6) vidée peut être déplacée entre le côté avant et le côté arrière (7), une zone de liaison (11) étant prévue au niveau du côté avant, laquelle relie la zone de pleins (10) à la zone de vides (12) de sorte que les trois zones (10, 11, 12) soient disposées dans l'ensemble en forme de U et permettent un transport de l'unité porteuse (6) le long de la zone de pleins (10) depuis le côté arrière (7) jusqu'au côté avant, le long du côté avant par le biais de la zone de liaison (11) jusqu'à la zone de vides (12) et le long de celle-ci à nouveau depuis le côté avant jusqu'au côté arrière (7) du poste de préparation des commandes (1.1-1.6), **caractérisé en ce qu'**au moins dans la zone de pleins (10) et dans la zone de vides (12) sont prévus des rails de guidage (13) dans lesquels est guidée l'unité porteuse (6), des bandes à rouleaux de transport (14) étant prévues à la fois dans la zone de pleins (10) et dans la zone de vides (12), lesquelles facilitent un mouvement de déplacement de l'unité porteuse pleine ou vide (6), un premier dispositif de réglage (15, 15') étant prévu dans la zone de vides (12), le dispositif de réglage (15, 15') comprenant une barre à picots (16, 16') qui peut être déplacée par un levier (18) et un dispositif de réglage supplémentaire (15, 15') présentant une barre à picots (16, 16') étant prévu dans la zone de pleins (10), lequel peut être déplacé par une pédale à pied (19).

2. Poste de préparation des commandes selon la revendication 1, **caractérisé en ce que** dans la région de la zone de liaison (11) sont prévus des paliers (17) sollicités par ressort, en particulier des roulements à billes, qui permettent exclusivement un déplacement d'une unité porteuse vidée (6).

3. Poste de préparation des commandes selon l'une quelconque des revendications 1 ou 2, **caractérisé en ce qu'**au moins les rails de guidage (13) de la zone de pleins (10) sont élargis dans la direction du côté arrière (7).

4. Dispositif de préparation des commandes (2) comprenant plusieurs postes de préparation des commandes (1.1-1.6) disposés en position adjacente les uns aux autres selon l'une quelconque des revendications 1 à 3, **caractérisé en ce qu'**au moins un chariot de préparation des commandes (8) est prévu, lequel peut être déplacé le long du côté arrière (7) des postes de préparation des commandes (1.1-1.6) et lequel peut être positionné par rapport aux zones de pleins/vides (10, 12) des postes de préparation des commandes individuels (1.1-1.6) de telle sorte que les pleins/vides puissent être transférés/repris.

5. Procédé de préparation des commandes utilisant un dispositif de préparation des commandes (2) selon la revendication 4, **caractérisé par** les étapes de procédé suivantes
- amener un produit à préparer (5) se trouvant sur une unité porteuse (6) jusqu'à un poste de préparation des commandes (1.1-1.6) au moyen d'un chariot de préparation des commandes (8),
- transférer l'unité porteuse (6) conjointement avec le produit à préparer (5) depuis le chariot de préparation des commandes (8) jusqu'à la zone de pleins (10) du poste de préparation des commandes (1.1-1.6),
- déplacer le produit à préparer (5) le long de la zone de pleins (10) depuis le côté arrière (7) du poste de préparation des commandes (1.1-1.6) jusqu'à son côté avant,
- enlever le produit à préparer (5) par un préparateur de commandes,
- déplacer l'unité porteuse (6) de la zone de pleins (10) par le biais de la zone de liaison (11) dans la zone de vides (12) et le long de celle-ci à nouveau jusqu'au côté arrière (7) du poste de préparation des commandes (1.1-1.6),
- transférer l'unité porteuse (6) de la zone de vides (12) jusqu'au chariot de préparation des commandes (8),
- évacuer l'unité porteuse (6) au moyen du chariot de préparation des commandes (8).

6. Procédé de préparation des commandes selon la revendication 5, **caractérisé en ce que** pour le déplacement de l'unité porteuse (6) le long de la zone de vides (12) jusqu'au côté arrière (7) du poste de préparation des commandes (1.1-1.6), on utilise un dispositif de réglage (15).
